# EUROPEAN PATENT APPLICATION

(11) **EP 1 978 660 A2**
(43) Date of publication of application: **08.10.2008**
(21) Application number: 08153064.4
(22) Date of filing: 20.03.2008
(51) Int. Cl.: H04H 60/16

(54) **System of offering digital broadcasting using PIP of portable terminal, method thereof, and apparatus thereof**

(30) Priority: 04.04.2007 KR 20070033337
(71) Applicant: Samsung Electronics Co., Ltd., Suwon-si, Gyeonggi-Do (KR)
(72) Inventor: Song, Ho Kwon, c/o Samsung Electronics Co., Ltd., Suwon-si, Gyeonggi-do (KR); Jung, Young Jun, c/o Samsung Electronics Co., Ltd., Suwon-si, Gyeonggi-do (KR); Seo, Jeong Wook, c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

A system, method and apparatus for providing digital broadcasting using a PIP function of a portable terminal. The method includes: transmitting a request message based on additional broadcasting information; receiving an entitlement management message (EMM) corresponding to the request message; and decrypting the EMM, displaying pay-per-view broadcasts while displaying advertisements through the PIP screen, simultaneously. The system and apparatus are configured to perform the method. Therefore, users can view pay-digital broadcasts for free, as advertising is broadcasted through the PIP screen during the pay-digital broadcasts. The broadcasting service providers can apportion charges to one or more sponsors corresponding to advertisement view times recorded in a billing server.

## Description

### BACKGROUND OF THE INVENTION

### 1. Field of the Invention

The present invention relates to technology that provides digital broadcasting services. More particularly, the present invention relates to a portable terminal having a digital broadcasting receiver forreproducing digital broadcasts, and to a system for providing digital broadcasting services to the portable terminal.

### 2. Description of the Related Art

A digital broadcasting receiver serves to receive a variety of digital broadcasting signals and displays information corresponding thereto on one or more displays. Since digital broadcasting signals refer to signals that are coded and modulated in a digital format prior to being broadcast, the signals must bedemodulated and decoded by a digital broadcasting receiver. The digital broadcasting receiver includes a tuner, a broadcasting data demodulator, and a broadcasting data decoder, etc. Digital broadcasting is typically classified into digital multimedia broadcasting and digital video broadcasting. Digital broadcasting generally refers to a service that provides a plurality of service channels through one frequency channel. The service channels may include channels through which broadcasting stations transmit digital broadcasting signals, and channels through which program information and/or a variety of broadcasting information is transmitted.

There is an increase of portable terminals constructed with multimedia-dedicated processors to strengthen multimedia functions. More specifically, such portable terminals are increasingly designed to mount digital broadcasting receivers to provide multimedia functions. Examples of portable terminals include but are not limited to wireless telephones, laptop computers, and Personal Digital Assistants (PDAs), etc. A portable terminal may be configured to include a wireless communication unit capable of performing radio frequency (RF) communications.

The digital broadcasting receiver (or, for example, the portable terminal having a digital broadcasting receiver) receives audio and video data as well as a variety of additional broadcasting information provided from broadcasting stations or broadcast providers, and processes the information using corresponding decoders. The additional broadcasting information may comprise, for example, an electronic program guide (EPG) for Digital Multimedia Broadcasting (DMB), and an Electronic Service Guide (ESG) for Digital Video Broadcasting for Handhelds (DVB-_H). The ESG may include the program guide of served broadcasts.

Digital broadcasting also provides a variety of content to users. Some of the contents are provided by pay-per-view broadcasts. A pay-per-view broadcast refers to a broadcasting service that users can view only if they have paid the service fee. In general, a broadcasting service provider scrambles the pay-contents so that non-paying users can not view it without a decoder. In some countries, the use of an unauthorized decoding device to view the pay-contents without paying is a violation of local laws.

Due to the additional costs, most of the users view only free-contents provided through free broadcasts instead of subscribing to pay-content services. On the other hand, broadcasting service providers try to increase the number of users and their income from advertising revenues, so they encourage the purchase of pay-per-view broadcasts by providing some of their most desired programming as pay-per-view content. However, event if the contents are all popular and, accordingly, the uses are charged additional fees for viewing such content, there is still a tendency for users select content that is free or does not incur additional charges on top of any basic access charge. Thus, the broadcasting service providers have increasingly found it difficult to increase the number of subscribers.

### SUMMARY OF THE INVENTION

The present invention is made to solve at least some of the above problems and to provide the advantages described herein below.Accordingly, the present invention provides a method for allowing users to view pay-digital broadcasts for free, as advertising can be broadcast during the pay-digital broadcasts while the users are viewing the pay-digital broadcasts.

The present invention further provides a beneficial business model for digital broadcasting service providers.

In accordance with an exemplary aspect of the present invention, a method in accordance with an exemplary embodiment of the present invention for providing digital broadcasting services using a picture-in-picture (PIP) screen of a portable terminal. The method may typically include: transmitting a request message based on additional broadcasting information; receiving an entitlement management message (EMM) corresponding to the request message; decoding the EMM, playing back pay-per-view broadcasts, and playing back advertisements through the PIP screen, simultaneously.

Preferably, the pay-per-view broadcasts are played back (displayed), provided that the advertisements are played back.

In accordance with another exemplary embodiment of the present invention, a method for providing digital broadcasting services using a picture-in-picture (PIP) screenincludes: , transmitting by a portable terminal a request message based on additional broadcasting information; recording by a billing server, an advertisement view start time based on the request message; generating by an EMM server, an entitlement management message (EMM) according to the request message;, transmitting the EMM by a broadcasting service provider's server; and decrypting the EMM by the portable terminal and, playing back pay-per-view broadcasts while playing back advertisements through the PIP screen, simultaneously.

In accordance with another exemplary embodiment of the present invention, an apparatus for providing digital broadcasting services using a PIP screen of a portable terminal. The apparatus includes: a wireless communication unit for transmitting a request message and for receiving an EMM corresponding to the request message; a controller for decrypting the EMM and for playing back pay-per-view broadcasts, and playing back advertisements through the PIP screen, simultaneously.

In accordance with another exemplary embodiment of the present invention, a system for providing digital broadcasting services using a PIP screen. The system includes: a broadcasting service provider's server for transmitting an EMM based on a request message; a portable terminal for transmitting the request message, receiving the EMM corresponding to the request messageand playing back pay-per-view broadcasts while playing back advertisements through a PIP screen, simultaneously.

### BRIEF DESCRIPTION OF THE DRAWINGS

The exemplary objects, features, and advantages of the present invention will become more apparent from the following detailed description in conjunction with the accompanying drawings, in which:
FIG. 1 is a view depicting an exemplary configuration of a portable terminal according to an exemplary embodiment of the present invention;
FIG. 2 is a view depicting an exemplary configuration of a digital broadcasting service system using picture-in-picture (PIP), according to the present invention;
FIG. 3 is a view depicting a digital broadcasting service using PIP, according to an exemplary embodiment of the present invention;
FIGS. 4A and 4B are flow charts illustrating a method for providing a digital broadcasting service using PIP of a portable terminal 10, according to an exemplary embodiment of the present invention; and
FIGS. 5A to 5D are exemplary screens describing a digital broadcasting service method using PIP of a portable terminal according to an exemplary embodiment of the present invention.

### DETAILED DESCRIPTION

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art with a description of such well-known functions and structures.

Although the examples of a portable terminal according to the present invention described herein are based on a mobile communication terminal, it will be appreciated that the portable terminal refers to a device that can receive digital broadcasting and play back the digital broadcasts. The portable terminal can be preferably applied to all the information communication devices, multimedia devices, and their applications, non-limiting examples such as, a mobile communication terminal, digital broadcasting terminal, personal digital assistant (PDA) terminal, smart phone, international mobile telecommunication 2000 (IMT-2000) terminal, code division multiple access (CDMA) terminal, wideband code division multiple access (WCDMA) terminal, and universal mobile telecommunication service (UMTS) terminal, etc., just to name a few devices. In some exemplary embodiments of the present invention, although the digital broadcasting is described based on a DVB-H, it will be easily appreciated that it may not restrict the scope of the present invention, instead the present invention may be applied to any portable terminal capable of providing digital broadcasts for viewing.

In some exemplary embodiments of the present invention described herein may disclose examples in which the digital broadcasting is based on an electronic service guide (ESG), it will be appreciated by a person of ordinary skill in the art the spirit and scope of the present invention is not limited to operation with ESGs, and the present invention may also be applied to any additional data that is at or about the same level as the ESB, which can be received by portable terminals from broadcasting service providers. One example of such additional data is an electronic program guide (EPG). In particular, additional data, such as ESG and EPG, is referred to as "additional broadcasting information" in the exemplary embodiments of the present invention.

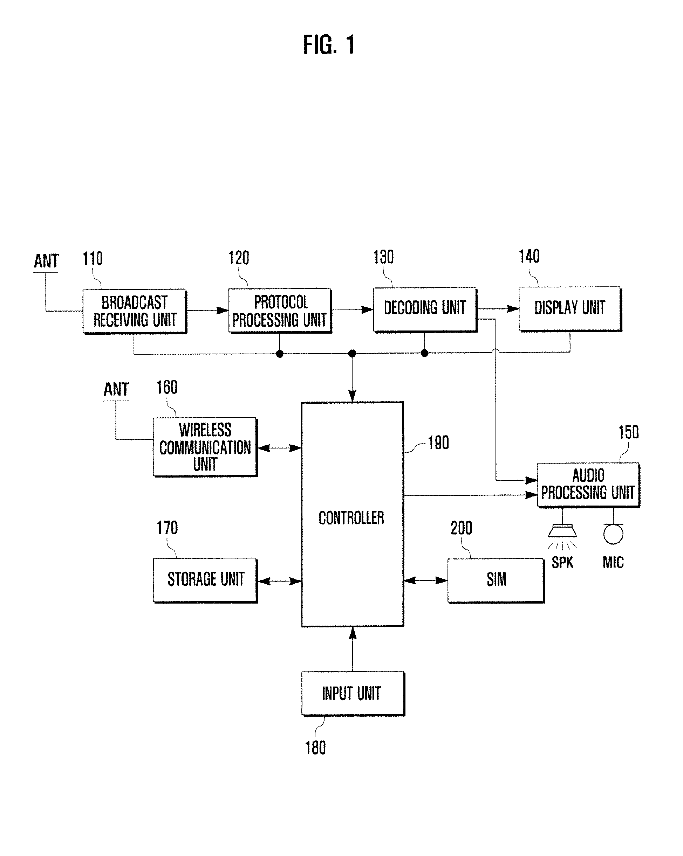

A configuration of a portable terminal including a digital broadcasting receiver according to an exemplary embodiment of the present invention is described in detail with reference to FIG. 1.

As shown in the example in FIG. 1, the portable terminal 10 may include a broadcast receiving unit 110, a protocol processing unit 120, a decoding unit 130, a display unit 140, an audio processing unit 150, a wireless communication unit 160, a storage unit 170, an input unit 180, and a controller 190.

The broadcast receiving unit 110 receives service channel data regarding a physical channel, selected by a user, according to the control of the controller 190. To this end, the broadcast receiving unit 110 may typically include a tuner and a broadcasting data demodulator. When a user selects a service channel, the tuner is set to a physical channel frequency through which the selected service channel is transmitted, and receives signals of the service channel of the set physical channel. To set a physical channel frequency, a modulation controller controls the tuner according to channel control data output to the controller 190, and sets a PID of a service channel selected by a PID filter.

The protocol processing unit 120 receives service channel data from the broadcast receiving unit 110, and processes a protocol of the received service channel data to separate and output video data, audio data, and broadcasting information data. The broadcasting information data includes ESG data.

Still referring to FIG. 1, the decoding unit 130 receives the video data and audio data from the protocol processing unit 120, and decodes and outputs it. To this end, the decoding unit 130 includes audio and video decoders. The audio decoder decodes encoded audio data and outputs the encoded audio data. The video decoder decodes video data of service channels and outputs the decoded video data. The decoded video data and the decoded audio data are typically played back through the display unit 140 and a speaker of the audio processing unit 150, respectively.

The display unit 140 typically displays a menu of a portable terminal, including but not limited to user data input by a user, function setting information, and a variety of information. The display unit 140 may be implemented with a Liquid Crystal Display (LCD). In this case, the display unit 140 includes a controlling device for controlling the LCD, a video memory for storing image data, and parts of the LCD. In an exemplary embodiment of the present invention, when the display unit 140 is implemented with a touch screen, the display unit can also perform a part of or all of the functions of the input unit 180.

The audio processing unit 150 processes audio signals output from the controller 190 and the decoder 130 or outputs audio signals, such as a voice, input from a microphone MIC to the controller 190. That is, the audio processing unit 150 converts analog voice signals from the microphone MIC into digital signals (for example, using Pulse code modulation (PCM)) and outputs them to the controller 190. The audio processing unit 150 also converts digital signals (such as, for example PCM) from the controller 190 into audible analog signals and outputs them through the speaker SPK.

Still referring to FIG. 1, the wireless communication unit 160 transmits and receives user data, such as messages and voices to and from other external portable terminals in wireless communication. The wireless communication unit 160 includes a radio frequency (RF) transmitter for up-converting the frequency of transmitted signals and amplifying the transmitted signal, and an RF receiver for low-noise amplifying received RF signals and down-converting the frequency of the received RF signals. The wireless communication unit 160 converts modulated signals received from the controller 190 into intermediate frequency (IF) signals and then converts the intermediate frequency signals into RF signals for transmission to a base station through an antenna ANT. The wireless communication unit 160 also receives RF signals from the base station through the antenna ANT and coverts them into IF signals and base band signals, sequentially, for output to the controller 190.

The storage unit 170 stores downloaded contents and user data generated by a user as well as application programs for performing functions according to an exemplary embodiment of the present invention. The storage unit 170 may include a program area and a data area.

Still referring to the storage unit 170, the program area typically stores an operating system (OS) for booting a portable terminal and application programs that are necessary for other option functions of the portable terminal, such as a music reproduction function, and image or moving image reproduction functions, etc. For example, when a user requests the respective listed functions in a portable terminal, the controller 190 activates corresponding application programs in response to the user's request to provide corresponding functions to the user. The storage unit 170 may include at least one or more buffers that temporarily store user data (music files, still images, and moving images) generated while application programs related to the reproduction of music and moving images are executed.

The data area stores user data generated as a portable terminal is used, for example, ESG data.

The input unit 180 includes a plurality of input keys and functions keys through which numerals or text information is received and a variety of functions are set. The functions keys may include direction keys, side keys, and shortcut keys for performing special functions. The input unit 180 outputs input key signals, related to the user's setting and the function control of a portable terminal, to the controller 190.

The controller 190 controls the entire operation of a digital broadcasting receiver according to this exemplary embodiment. In particular, the controller 190 can manage the flow of all signals of a portable terminal. That is, the controller 190 typically controls the flow of signals between the broadcast receiving unit 110, protocol processing unit 120, decoder 130, display unit 140, audio processing unit 150, wireless communication unit 160, storage unit 170, and input unit 180.

The controller 190 is adapted to perform the respective functions of the portable terminal according to input signals input from the input unit 180 and displays the information, such as a current status and/or a user menu, etc., on the display unit 140.

In particular, the controller 190 may transmit request and terminate messages through the wireless communication unit 160 in an exemplary embodiment of the present invention. In such a case, it is preferable that the messages are transmitted through a wireless application protocol (WAP).

When receiving EMM, the controller 190 decrypts the EMM to descramble scrambled pay-broadcast signals. The controller 190 converts and modulates (for example, PCM) voice signals, provided from the audio processing unit 150, through channel coding and interleaving, and then outputs the voice signals to the wireless communication unit 160. The controller 190 processes voice signals provided from the wireless communication unit 160, through demodulation, equalization, channel decoding, and deinterleaving, to generate (for example, PCM) voice signals and then outputthe voice signals to the audio processing unit 120. To this end, the controller 190 includes a modem and a codec.

Still referring to FIG. 1, a subscriber identity module (SIM) 200 serves to identify a user of a portable terminal 10. Such a SIM 200 allows a user to use a plurality of portable terminals. The SIM 200 may store a conditional access system (CAS) smart key. The CAS smart key is an identification number for identifying users, and thus facilitates identifying a current user of a portable terminal.

For example, to use a portable terminal "A" (not shown), a user of the portable terminal A must install his/her own SIM to the portable terminal A. In the meantime, if the user wishes to user another portable terminal, portable terminal "B" (not shown), the SIM of the portable terminal A can be installed to the portable terminal B. Therefore, when transmitting a request message according to an exemplary embodiment of the present invention, a CAS smart key of the SIM is transmitted together with the request message, thereby identifying the current user of the portable terminal B.

According to another exemplary embodiment of the present invention a portable terminal (not shown), may further include additional function units, including but not limited to: a storage medium inserting unit that receives external storage media, such as memory cards and SIMs, to store their data in a storage unit of the portable terminal; a camera module; a connection terminal for connecting to external digital devices and for exchange data therewith; a recharging dedicated terminal; and a digital sound source reproduction module, such as an MP3 module.

With the spread of digital convergence, although the mobile communication terminals developed are too various to list their modifications in this description, it will be easily appreciated to those skilled in the art that units similar to the above-listed units may be further included to the mobile communication terminal according to the present invention.

Accordingly, an advantage of the present invention is the ability of users to view pay-per-view broadcasts for free by having the users view advertisements typically but not necessarily simultaneously. The present invention allows the broadcasting service providers to charge corresponding sponsors based on the time that their advertisements are broadcast to the users.

In particular, the present invention is designed to have the users view the pay-per-view broadcasts and the advertisements, simultaneously. In an exemplary embodiment of the present invention, a screen playing back such advertisements is referred to as a "picture-in-picture (PIP)" screen. In addition, playing back a pay-channel while advertisements are played backed on the PIP screen is referred to as a "PIP advertisement service."

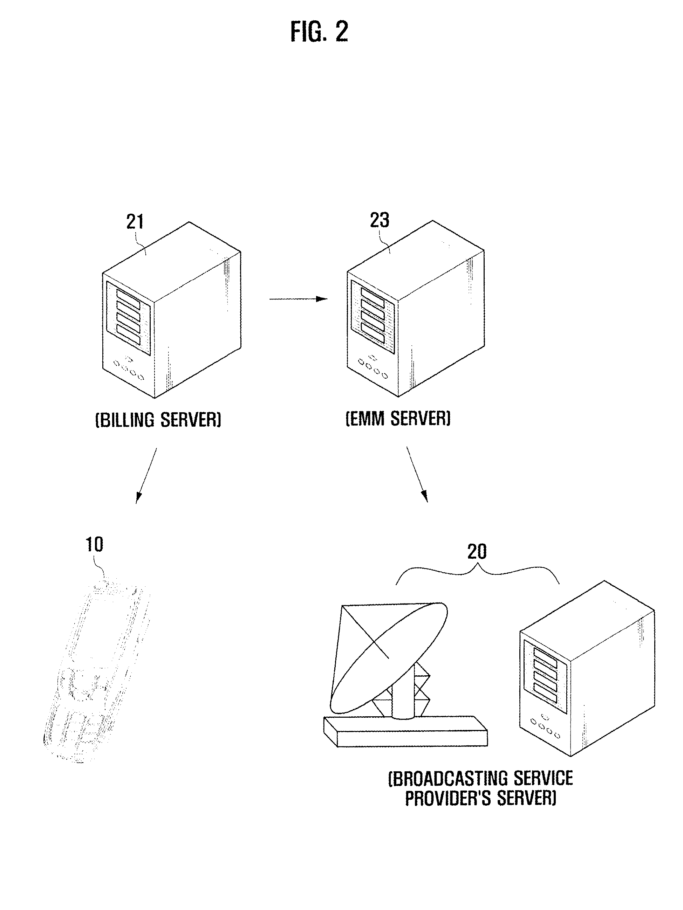

The following is a description of a digital broadcasting system. FIG. 2 is a view depicting a configuration of a digital broadcasting service system using picture-in-picture (PIP), according to an example of the present invention.

Referring to FIG. 2, the system for PIP broadcasting service typically includes a billing server 21, an entitlement management message (EMM) server 22, and a broadcasting service provider's server 20.

The billing server 21 serves to record start and end times of advertisements and charges accrued for such advertisements to a corresponding sponsor.

The EMM server 23 receives the CAS smart key provided by the billing server 21, encrypts view authorization of a corresponding broadcast, and prepares the EMM.

The broadcasting service provider's server 20 provides digital broadcasting services. In particular, the broadcasting service provider's server 20 scrambles a corresponding broadcast for pay-per-view broadcasts and transmits the broadcast. Also, the broadcasting service provider's server 20 may transmit EMM for descrambling a pay-broadcast to a portable terminal 10.

The following is a description of digital broadcasting services according to the digital broadcasting service system using PIP.

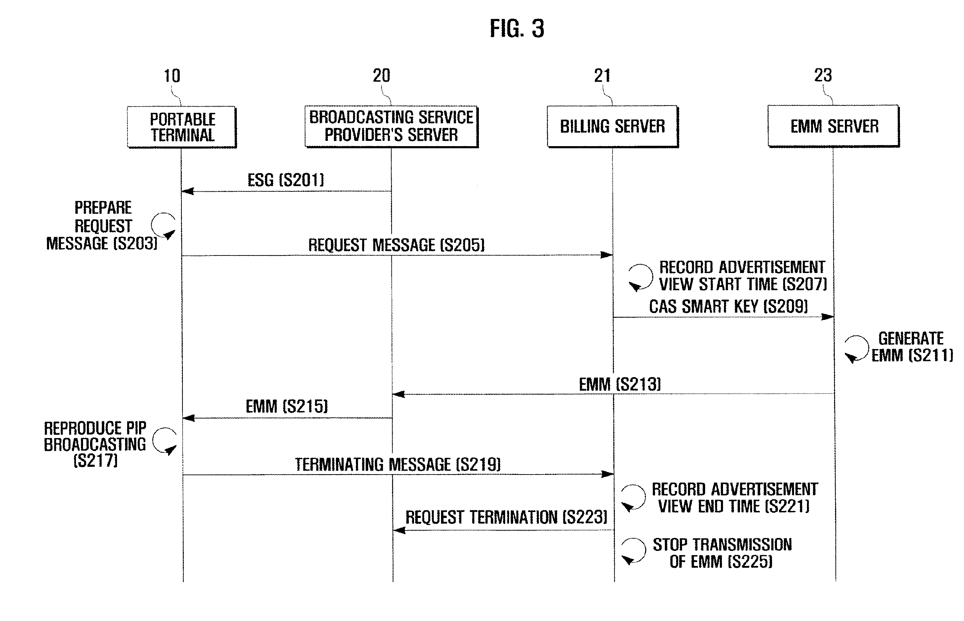

FIG. 3 is a view depicting a digital broadcasting service using PIP, according to an exemplary embodiment of the present invention.

Referring to FIG. 3, the portable terminal 10 receives ESG data from a broadcasting service provider's server 20 (S201), and prepares a request message based on the ESG data (S203). Here, the request message is prepared based on the ESG data and may include a channel identifier, an advertisement identifier, and a CAS smart key. The channel identifier and the advertisement identifier refer ESG, and the CAS smart key has an inherent identification number and stored in a SIM 200. The CAS smart key is preferably stored in the SIM 200 of the portable terminal, and may also be stored in storage media, such as an IC card (that may also be referred to as a smart card, a CAS card, or a CAS unit) and a storage unit 170.

Still referring to FIG. 3, the portable terminal 10 transmits the request message to the billing server 21 (S205). The billing server 21 records billing information, which includes an advertisement view-start time, based on the request message (S207).

The billing server 21 transmits the CAS smart key of the request message to the EMM server 23 (S209).

The EMM server 23 generates an EMM based on the CAS smart key (S211). The EMM may include an entitlement control message (ECM). In particular, the EMM is transmitted, typically with an encrypted intermediate key. Here, encrypting of the intermediate key can be achieved by using the CAS smart key included in the request message that was transmitted from the portable terminal 10 at step S205. That is, when the CAS smart key of the portable terminal is identical to an encryption key of the EMM, the EMM server 23 encrypts the EMM to obtain the intermediate key of the EMM. A control word (CW) is encrypted into the ECM. Such a CW can be acquired to decrypt the ECM using the intermediate key.

The EMM server 23 transmits the EMM generated at step S213 to the broadcasting service provider's server 20. The broadcasting service provider's server 20 transmits the EMM to the portable terminal 10 (S215).

When receiving the EMM, the portable terminal 10 typically decrypts the corresponding broadcasting signals through the received EMM and plays back PIP broadcasting (S217). In particular, the portable terminal 10 determines whether its CAS smart key is identical to an encryption key of the EMM. Since the portable terminal 10, having transmitted its own CAS smart key, receives the identical number of the key from the EMM server, the portable terminal 10 can decrypt the received encrypted key of the EMM.

For example, if the CAS smart key of the portable terminal 10 was identical to an encryption key of the EMM, the portable terminal 10 can obtain an intermediate key from the EMM. After that, the portable terminal 10 decrypts the ECM using the intermediate key, thereby obtaining the CW. Thereafter, the portable terminal 10 descrambles broadcasting signals into normal bit steams using the CW, allowing the portable terminal 10 to display a normal screen.

However, in the event that the PIP is stopped during a broadcast, the portable terminal 10 automatically transmits a termination message to the billing server 21 (S219).

The billing server 21 records the advertisement view-end time (S221). The advertisement view-end time is used as data for charging a bill to a corresponding sponsor. The billing server 21 transmits a termination request signal to the broadcasting service provider's server 20 (S223).

The broadcasting service provider's server 20 stops transmitting the EMM (S225). Thus, the portable terminal 10 can no longer descramble the broadcasting data nor broadcast a normal screen.

As described above, when the portable terminal 10 transmits a request message, it can receive the EMM that can be viewed.

Now, the following is a description of digital broadcasting services in terms of the portable terminal 10 according to another exemplary embodiment of the present invention.

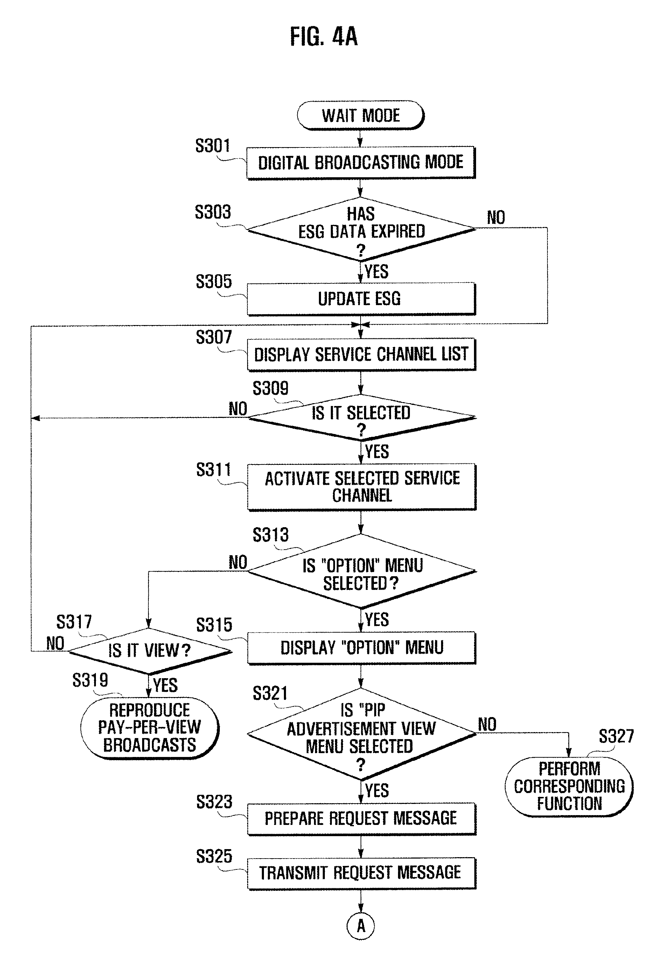

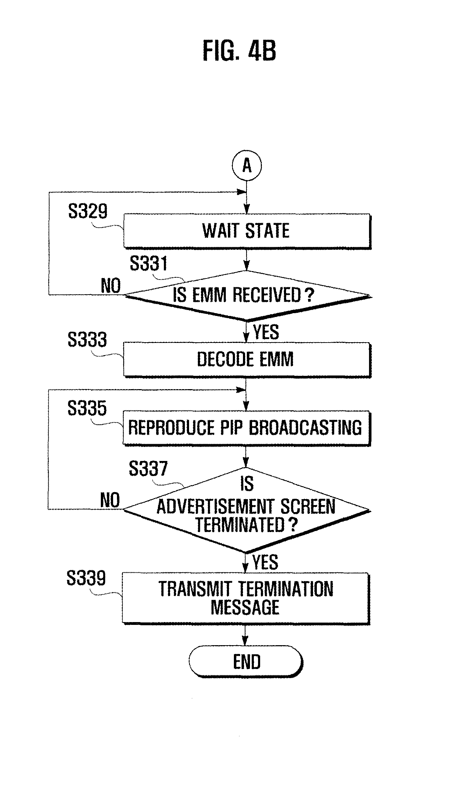

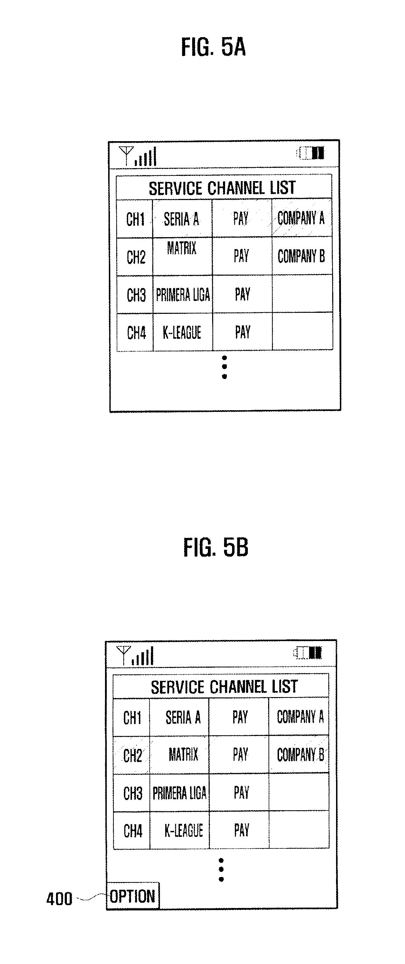

FIGS. 4A and 4B are flow charts illustrating a method for providing a digital broadcasting service using PIP of a portable terminal 10, according to an exemplary embodiment of the present invention. FIGS. 5A and 5B are views screens describing a digital broadcasting service method using PIP of a portable terminal according to an exemplary embodiment of the present invention.

Referring to FIG. 4A, the controller 190 (shown in FIG. 1) enters a digital broadcasting mode from a wait mode according to user's selection (S301). The user's selection can be achieved by a digital broadcasting service provider's key (hereinafter referred to as a "TV key"), etc., and enables the current mode to enter the digital broadcasting mode through a menu, sequentially.

The controller 190 determines whether the current ESG data is expired in the digital broadcasting mode (S303).

When the current ESG data has expired in the digital broadcasting mode at step S303, the controller 190 updates the ESG data (S305) and then proceeds with displaying the service channel list at step S307. If the current ESG data have not expired in the digital broadcasting mode at step S303, the controller 190 proceeds with step S307.

The broadcasting service provider server 20 (example shown in FIG. 2) can perform updates and transmissions for the ESG data, periodically or just when necessary. However, it is preferable that the portable terminal 10 determines whether the ESG data has expired each time the portable terminal 10 enters the digital broadcasting mode and then updates the ESG data based on the determination.

The PIP screen, according to an exemplary embodiment of the present invention, refers to a screen that can display pay-per-view broadcasts and advertisements simultaneously. That is, the exemplary embodiment of the present invention provides a pay-per-view authorization to a user so that the user can view the pay-per-view broadcasts for free while having the user view the advertisements through the PIP screen.

The ESG includes information regarding whether or not corresponding broadcast programs are charged additional costs, and, for example, whether the programs can be accessed by a PIP broadcasting service in the case of pay channels. In addition, the ESG typically includes information about corresponding broadcasting contents that include identifiers of corresponding broadcasting channels, and information about corresponding advertisements that include identifiers of sponsor advertisements of corresponding broadcasting channels.

The following table (Table) 1 describes ESG data according to an exemplary embodiment of the present invention.

**[Table 1]**

| No. | Variable | Value |
|---|---|---|
| 1 | Channel ID | cbms://telecomitalia.ti/content/5 |
| 2 | Title | Matrix |
| 3 | Duration | 2007/2/22/12:30:00 |
| 4 | Related service | PIP Advertisement |
| 5 | Media Locator | http://caption.tim,it/AdCh1 |
| 6 | Advertisement ID | cbms://telecomiitalia.ti/content/5/Ad ch1 |

As shown in the examples in Table 1, when there is a pay channel that supports free views through PIP advertising, ESG data of the channel includes information allowing a user to view the PIP broadcasting. The user can be provided the option of viewing at no cost, or a reduced cost, by PIP advertising.

Still referring to Table 1, the information of the channel includes the channel identifier (ID) (No. 1 ) and the Title (No. 2). In particular, the channel ID serves to identify channels.

Duration (No. 3) is indicative of a term allowing a user to view a corresponding channel free while the user view PIP advertisements through PIP screen. For example, as descried in Table 1, the user can view the pay channel free until February 22, 2007, 12:30 pm.

Related service (No. 4) is a field indicative of types of additional services provided through a corresponding channel. In an exemplary embodiment of the present invention, the type of additional service is PIP advertisement.

Media Locator (No. 5) indicates an access route to view PIP advertisements. In an exemplary embodiment of the present invention, a request message is transmitted to a media locator (http://caption.tim,it/AdCh1) through WAP protocol to request a PIP view authorization.

Advertisement Identifier (ID) (No. 6 in Table 1) serves to identify IPP advertisements mapped into corresponding channels.

Now referring to the flow chart of FIG. 4A, when the current ESG data have not expired in the digital broadcasting mode at step S303 but updated ESG data exists, the controller 190 (shown in FIG. 1) displays a service channel list through the display unit 140 (S307). The service channel list may include whether it is free/pay channel and whether there is an advertisement sponsor using PIP. To this end, the controller 190 refers to ESG data.

According to an exemplary embodiment of the present invention, a user can choose a channel to view referring to whether it is a free/pay channel and whether it is an advertisement sponsor using PIP in the service channel list.

The following table (Table 2) describes a configuration of a service channel list.

**[Table 2]**

| | Service Channel | Title of Broadcasts | Charge status | Advertisement Sponsor |
|---|---|---|---|---|
| 1 | CH1 | Seria A | Pay | Company A |
| 2 | CH2 | Matrix | Pay | Company B |
| 3 | CH3 | Primera Liga | Pay | None |
| 4 | CH4 | K-League | Free | None |

The service channel list described in Table 2 may be shown on a display screen of FIG. 5A.

Referring to Table 2 and FIG. 5A, the first item (CH1; Seria A) of the service channel list is activated. The charge status and the PIP sponsor may be indicated using icons. Therefore, a user can easily read the charge status and the PIP sponsor through the service channel list.

When the list of service channels is displayed on the display unit, the user can select a channel by key input. As previously discussed, there could be a touch screen or voice response input in addition to or instead of a key input. If a corresponding service channel is selected, for example, by inputting direction keys (S309), the controller 190 detects the key input and activates and displays the selected service channel (S309). For example, if channel No. 2 (Matrix) is selected, the region of channel No. 2 is activated as shown in FIG. 5B.

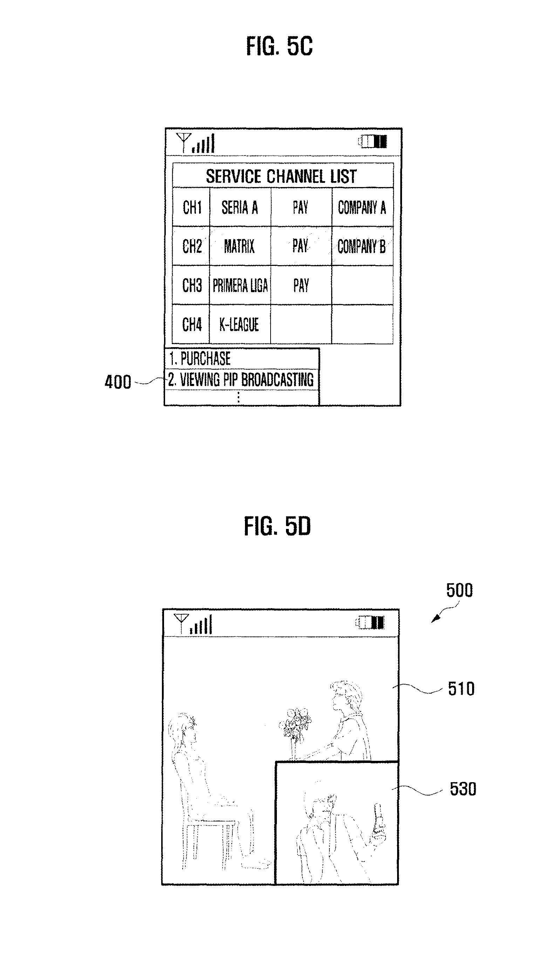

Still referring to the flowchart in FIG. 4A, while channel No. 2 is activated, if the user selects the menu 400 of "OPTION" (S313), the controller 190 detects the menu selection and displays its submenu 600 (S315), as shown in FIG. 5C.

However, if the user does not select the menu 400 of "OPTION" at step S313, the controller 190 (shown in FIG. 1) determines whether a view function is selected (S317). If the view function has been selected at step S317, the controller 190 broadcasts the activated service channel (S319).

In a case where the submenu 400 of "OPTION" is displayed at step S315, if the user selects an item "PIP advertisement view" in the submenu (S321), the controller 190 detects the submenu selection and prepares a request message (S323). After that, the controller 190 transmits the prepared request message through the wireless communication unit 160 (S325).

The request message is prepared based on ESG and includes the following information: a channel identifier, an advertisement identifier, and a CAS smart key. The channel identifier and the advertisement identifier refer to ESG. The channel identifier is referred to as an identifier of a corresponding broadcasting channel. The advertisement identifier is referred to as an identifier of sponsor advertisement content. The CAS smart key includes an identification number of a portable terminal. That is, the CAS smart key is an inherent number stored in a portable terminal.

The CAS smart key can be stored, for example, in storage media, such as an IC card, a smart card, an SIM card, a CAS card, or a memory.

The request message refers to the ESG data, which is transmitted to the site indicated by the media locator through a WAP protocol, preferably.

When the user selects other items other than the "PIP advertisement view," the controller 190 performs a corresponding function (S327).

As described above, if the portable terminal 10 (shown in FIG. 3) transmits the request message to the billing server 21, the billing server 21 records an advertisement view-start time.

After that, the billing server 21 transmits the CAS smart key of the request message to the EMM server 23. The EMM server 23 prepares the ECM and EMM in order and then transmits them to the broadcasting service provider's server 20.

The broadcasting service provider's server 20 transmits the EMM including the prepared ECM to the portable terminal 10. The portable terminal 10 descrambles corresponding broadcasting programs based on the EMM and allows a user to view the PIP.

The following is a description of an exemplary method that a portable terminal 10 receives EMM and broadcasts corresponding broadcasting programs.

FIG. 4B is a flow chart illustrating a method that a portable terminal receives EMM and allows a user to view PIP broadcasting, according to an exemplary embodiment of the present invention. The method is described with reference to the exemplary display shown in FIG. 5D.

As shown in FIG. 4B, after transmitting the request message, the controller 190 enters a wait state to receive the EMM (S329).

When the broadcasting service provider's server 20 transmits the EMM including ECM to the controller 190 in the wait state, the controller 190 receives the EMM (S331) and decodes/decrypts it (S333).

The controller 190 determines whether the smart key is identical to the encryption key of the EMM. lf the smart key is identical to the encode key of the EMM, the controller obtains an intermediate key from the EMM. After that, the controller 190 extracts a CW from the ECM using the intermediate key. Thereafter, the controller 190 descrambles the scrambled broadcast data using the CW.

The controller 190 reproduces PIP broadcasting (S335). That is, the controller 190 reproduces the descrambled corresponding broadcast and advertisement.

An exemplary screen of such PIP broadcasting is shown in FIG. 5D. The PIP broadcasting screen 500 is configured to include a broadcasting screen 510 and an advertisement-broadcasting screen 530. The advertisement-broadcasting screen 530 is smaller in size than the broadcasting screen 510. In addition, the advertisement-broadcasting screen 530 is located at the bottom right of the broadcasting screen 510, but size, location, etc. according to the present invention is not limited by this exemplary embodiment. That is, it will be appreciated that the advertisement-broadcasting screen 530 may be implemented to be located at any position within the broadcasting screen 510 according to a user's selection.

The advertisement-broadcasting screen 530 shown in FIG. 5D may be terminated while the PIP broadcasting screen 500 is reproduced. When the advertisement-broadcasting screen 530 is terminated, the controller 190 detects such termination (S337), and transmits a termination message to the billing server 21 through the wireless communication unit 160 (S339).

When receiving the termination message, the billing server 21 records an advertisement viewing end time. After that, the billing serve 21 transmits a broadcasting termination request to the broadcasting service provider's server 20.

The broadcasting service provider's server 20 stops transmitting the EMM. Therefore, if view authorization is not acquired through, for example, a purchasing method, etc., the controller 190 cannot descramble corresponding broadcast programs.

The billing server 21 stores the advertisement view start time and end time. The broadcasting service provider can calculate the advertisement displaying time based on the advertisement view-start time and the advertisement view end-time and use the calculation data to charge an advertisement sponsor.

As described above, the present invention allows users to view pay-per-view broadcasts for free by having the users view the pay-per-view broadcasts and advertisements through the PIP screen simultaneously. Therefore, the present invention enables an increase in the number of portable terminal users and an increase in the access of special content that has previously been provided to users only by paying additional costs. In addition, since the broadcasting service providers can charge the advertisement sponsor based on the data that is recorded in the billing server according to the method of the present invention, they can increase their advertising income.

Although exemplary embodiments of the present invention have been described in detail hereinabove, it should be understood that many variations and modifications of the basic inventive concept herein described, which may appear to those skilled in the art, will still fall within the sprit of the present invention and the scope of the appended claims. For example, it is within the spirit of the invention that a user could view the programming contents of the EPG online, or in a printed form, such as a newspaper, and entering a code associated with a particular programming event, that permits viewing a program content with also viewing advertisements in the PIP screen. It is also possible that the user could select the programming from a device other than the portable terminal, which could even include calling a service provider. Finally, the term "simultaneously" may involve a degree of overlap that can be determined by the broadcast provider and or advertisers. In other words, it is within the spirit of the invention that advertisements could be displayed at intervals during a view of a program, or could being before and/or end prior to or after viewing of a program. In fact, turning the PIP advertising on and off periodically during the viewing of a program may attract the user's attention as they will see the appearance/disappearance of the PIP during the program.

## Claims

1. A method for providing digital broadcasting services using a picture-in-picture (PIP) screen of a portable terminal, comprising:
transmitting a request message based on additional broadcasting information;
receiving an entitlement management message (EMM) corresponding to the request message; and
decrypting the EMM, and displaying pay-per-view broadcasts by the portable terminal while displaying advertisements through the PIP screen, simultaneously.

2. The method of claim 1, wherein the pay-per-view broadcasts are displayed by the portable terminal provided that the advertisements are displayed.

3. The method according to claim 1, wherein the additional broadcasting information includes at least one of an electronic program guide (EPG) for Digital Multimedia Broadcasting (DMB), and an Electronic Service Guide (ESG) for Digital Video Broadcasting for Handhelds (DVB-_H).

4. The method of claim 1, wherein transmitting the request message comprises:
displaying a channel list based on the additional broadcasting information;
selecting a channel in the channel list which supports PIP broadcasting; and
transmitting the request message corresponding to the channel that supports the PIP broadcasting.

5. The method of claim 4, wherein the additional broadcasting information comprises, in the case of the cannel that supports the PIP broadcasting, at least one of a channel identifier for identifying corresponding broadcasts, a title of corresponding channel broadcasts, a service duration period of the PIP broadcasts, a related service showing whether PIP broadcasting is provided, a media locator indicative of address information for transmission of a request message, and an advertisement identifier of a corresponding broadcast.

6. The method of claim 4, wherein the request message comprises:
a channel identifier;
an advertisement identifier; and
a Conditional Access System (CAS) smart key.

7. The method of claim 1, wherein decrypting the EMM is performed when an encryption key of the EMM is identical to a Conditional Access System (CAS) smart key of the portable terminal.

8. The method of claim 1, further comprising:
transmitting a termination message when the broadcast advertisements are terminated.

9. The method of claim 8, further comprising:
terminating the pay-per-view broadcast as the termination message is transmitted.

10. A method for providing digital broadcasting services using a picture-in-picture (PIP) screen, comprising:
transmitting a request message based on additional broadcasting information by a portable terminal;
recording an advertisement view start time based on the request message by a billing server;
generating an entitlement management message (EMM) according to the request message by an EMM server;
transmitting the EMM by a broadcasting service provider's server; and
decrypting the EMM and displaying pay-per-view broadcasts while displaying back advertisements through the PIP screen, simultaneously, by the portable terminal.

11. The method of claim 10, wherein the pay-per-view broadcasts are displayed by the portable terminal provided that the advertisements are displayed.

12. The method of claim 10, wherein transmitting a request message comprises:
displaying a channel list based on the additional broadcasting information;
selecting a channel in the channel list, which supports PIP broadcasting; and
transmitting a request message corresponding to the channel that supports the PIP broadcasting.

13. The method of claim 12, wherein the request message comprises: a channel identifier, an advertisement identifier, and a Conditional Access System (CAS) smart key.

14. The method of claim 12, wherein the additional broadcasting information is updated each time that a current mode is changed to a digital broadcasting mode.

15. The method of claim 12, wherein the additional broadcasting information comprises, in the case of the channel that supports the PIP broadcasting, one or more of a channel identifier for identifying corresponding broadcasts, a title of corresponding channel broadcasts, a service duration period of the PIP broadcasts, a related service showing whether PIP broadcasting is provided, a media locator indicative of address information for transmission of a request message, and an advertisement identifier of a corresponding broadcast.

16. The method of claim 10, wherein generating the EMM generates an encryption key of the EMM so that the EMM is decrypted by a key identical to a Conditional Access System CAS smart key of the requested message.

17. The method of claim 10, further comprising:
when the broadcast advertisements are terminated, transmitting a termination message from the portable terminal;
recording an advertisement view end time, based on the termination message by the billing server; and
terminating transmission of the EMM according to the termination message by the broadcasting service provider's server.

18. An apparatus for providing digital broadcasting services using a picture-in-picture (PIP) screen of a portable terminal, comprising:
a wireless communication unit for transmitting a request message and for receiving an EMM corresponding to the request message; and
a controller for decrypting the EMM, and for controlling display of pay-per-view broadcasts and display of advertisements through the PIP screen, simultaneously.

19. The apparatus of claim 18, wherein the controller permits a play back of the pay-per-view broadcasts while the advertisements are played back through the PIP screen.

20. The apparatus of claim 18, wherein the request message comprises:
a channel identifier and an advertisement identifier, which are based the additional broadcasting information; and
a Conditional Access System (CAS) smart key.

21. The apparatus of claim 20, wherein the additional broadcasting information comprises, in the case of the channel that supports the PIP broadcasting, at least one of a channel identifier for identifying corresponding broadcasts, a title of corresponding channel broadcasts, a service duration period of the PIP broadcasts, a related service showing whether PIP broadcasting is provided, a media locator indicative of address information for transmission of a request message, and an advertisement identifier of a corresponding broadcast.

22. The apparatus of claim 18, wherein the controller decrypts the EMM when an encryption key of the EMM is identical to a Conditional Access System (CAS) smart key of the portable terminal.

23. The apparatus of claim 18, wherein the controller controls transmitting a termination message through the wireless communication unit when the advertisement is terminated and the PIP broadcast is terminated.

24. A system for providing digital broadcasting services using a PIP screen, comprising:
a broadcasting service provider's server for transmitting an EMM based on a request message; and
a portable terminal for transmitting the request message, receiving the EMM corresponding to the request message, display pay-per-view broadcasts while and playing back advertisements through a PIP screen, simultaneously.

25. The system of claim 24, wherein the portable terminal displays the pay-per-view broadcasts, provided that the advertisements are displayed.
